# EUROPEAN PATENT SPECIFICATION

(11) **EP 2 030 784 B1**
(45) Date of publication and mention of the grant of the patent: **13.04.2016**
(21) Application number: 07016722.6
(22) Date of filing: 27.08.2007
(51) Int. Cl.: B32B 27/08, B32B 27/32, B32B 27/34, B29C 51/00, B32B 27/30

(54) **GAS-BARRIER SHRINK FILMS FOR USE IN DEEP-DRAWING APPLICATIONS**
GASSPERR-SCHRUMPFFOLIEN ZUR VERWENDUNG IN TIEFZIEHANWENDUNGEN
FILMS RÉTRACTABLES À BARRIÈRE CONTRE LES GAZ POUR UNE UTILISATION DANS DES APPLICATIONS À FORMAGE PROFOND

(43) Date of publication of application: 04.03.2009
(73) Proprietor: Cryovac, Inc., Duncan, SC 29334 (US)
(72) Inventor: Re Fraschini, Marco, 20014 Nerviano (IT); Ursino, Felice, 20017 Rho (Milan) (IT)
(74) Representative: Fraire, Cristina

(56) References cited:
- WO-A-01/03922
- WO-A-01/92011
- DE-A1- 19 530 952

## Description

The present invention relates to shrink films, and more particularly to gas-barrier oriented heat-shrinkable films that are particularly useful for deep-drawing applications and to the packaging processes where these films are deep-drawn.

### BACKGROUND OF THE INVENTION

There are several packaging processes known in the literature and recently applied in industry, particularly in the food industry, that involve the deep-drawing of an oriented heat-shrinkable film to form a flexible container. In these methods the product to be packaged is loaded in the container thus obtained, and the package is then closed, once air is evacuated from the inside, with a lid, which may be e.g., a flat film, another deep-drawn flexible container, or a stretched film, that is sealed to the flange of the loaded container. Shrinkage of the packaging material, induced by a heat-treatment, then provides the desired tight appearance to the end vacuum package.

Examples of these methods are for instance those described in DE-A-2,364,565, in US 2005/0173289, or in EP-A-1,557,372.

These methods, that are herein collectively referred to as "thermoform-shrink" processes, vary in certain respects, such as the use of a lid which may or may not be heat-shrinkable, may or may not be deep-drawn or may or may not be stretched over the product, and in the manner the package is shrunk, e.g., heating only the deep-drawn container or the whole package, carrying out the heat-shrinking step on the end package exiting the vacuum chamber, or carrying out the heat-shrinking step while the package is still in the vacuum chamber, before or after it is sealed.

They essentially differ from the conventional deep-drawing packaging methods, in the use of a heat-shrinkable flexible film, typically with a thickness in the range of from 40 to 160 µm, instead of a conventional, thicker, non heat-shrinkable laminate. The advantages offered thus mainly reside in the highly reduced amount of packaging material employed and in the improved pack appearance that makes the product more appealing.

The first step, which is common to all the above processes, involves deep-drawing an oriented heat-shrinkable film to form a flexible container, e.g., a sort of a pouch or pocket of the size and dimensions desired and set by the specific mould employed.

Said step which is the key step in all these processes is also the most problematic one, particularly if a large depth, e.g. 60, 80, 100 or more mm, is desired for the container.

The oriented heat-shrinkable film that is used in said thermoforming step must in fact have many attributes to be fit-for-use in these processes :
i) it must be formable to the desired depths and the definition of the container formed should correspond as much as possible to the shape of the mould;
ii) it must have high mechanical properties so that the end package, where the thickness of the packaging material is reduced by the forming step, still has the necessary abuse resistance;
iii) once thermoformed, the film must show a certain minimum % free shrink in both directions and a certain shrink tension to guarantee that after the shrink step, that is carried out at temperatures that do not negatively affect the packaged product, the package appearance is as tight as desired;
iv) at the same time however it should not give the so-called "shrink back" effect, and the container formed will have to maintain as much as possible the size given by the mould; and
v) it should have good optical properties after deep drawing and shrinkage.

It has been found that the heat-shrinkable films presently used for shrink packaging applications, such as shrink bags or shrink FFS processes, are not fit-for-use for the "thermoform-shrink" processes as they do not meet most of the above requirements. WO0103922 A discloses a multilayer gas-barrier, heat sealable and heat shrinkable film comprising two outer layers of a blend of propylene co- or terpolymers, an innermost layer comprising an amorphous polyamide or a blend thereof with a copolyamide, and intermediate polyolefin -based and tie layers.

The present invention addresses this problem and is directed to an oriented heat-shrinkable film that has the attributes listed above and can thus be suitably employed i.a., in the "thermoform-shrink" processes.

### SUMMARY OF THE INVENTION

A first object of the present invention is a multi-layer, gas-barrier, biaxially oriented and heat-shrinkable film comprising at least
a first outer heat-sealable polyolefin layer a)
an inner gas-barrier layer b), and
a second outer abuse resistant layer c),
whereby the second outer abuse layer is a polyamide layer that comprises a major proportion of one or more amorphous polyamides.

The amorphous polyamides making up the major proportion of said polyamide layer have a Tg which is ≤ 120°C, or ≤ 110°C, or ≤ 100°C.

A second specific object of the present invention is a process of packaging a product which process involves deep-drawing an oriented heat-shrinkable film to form a flexible container, loading the product to be packaged in the thus formed container, evacuating and closing the container by means of a lid sealed to the flange of the container and subjecting the packaging material to a heat-shrinking step, either before or after sealing of the lid to the flange, wherein the oriented heat-shrinkable film which is deep-drawn is a film according to the first object.

A third specific object of the present invention is a shrunk package obtained by the process of the second object.

These and other objects, advantages, and features of the invention will be more readily understood and appreciated by reference to the detailed description of the invention and the drawings.

### DEFINITIONS

As used herein, the phrases "inner layer" and "internal layer" refer to any film layer having both of its principal surfaces directly adhered to another layer of the film.

As used herein, the phrase "outer layer" refers to any film layer having only one of its principal surfaces directly adhered to another layer of the film

As used herein, the phrases "seal layer", "sealing layer", "heat seal layer", and "sealant layer", refer to the film outer layer which will be involved in the sealing of the film to close the package and that will thus be in contact with the packaged product.

As used herein, the phrase "tie layer" refers to any inner film layer having the primary purpose of adhering two layers to one another.

As used herein, the phrases "machine direction" or "longitudinal direction", herein abbreviated "MD", refers to a direction "along the length" of the film, i.e., in the direction of the film as the film is formed during extrusion and/or coating.

As used herein, the phrase "transverse direction", herein abbreviated "TD", refers to a direction across the film, perpendicular to the machine or longitudinal direction.

As used herein, the term "orientation" refers to the process of solid-state orientation, i.e., the orientation process carried out at a temperature higher than the highest Tg (glass transition temperature) of the resins or blends of resins making up the majority of the structure and lower than the highest melting point of at least some of the film resins, i.e. at a temperature at which at least some of the resins making up the structure are not in the molten state. Thus, as used herein, the term "oriented" when referred to the films of the invention refers to films obtained by either coextrusion, extrusion coating or lamination of the resins of the different layers to obtain a primary thick sheet or tube (primary tape) that is quickly cooled to a solid state and then reheated to the so-called orientation temperature and thereafter biaxially stretched using either a tubular orientation process (for example a trapped bubble method) or a simultaneous or sequential tenter frame process.

As used herein the phrases "heat-shrinkable," "heat-shrink," and the like, refer to the tendency of the film to shrink upon the application of heat, i.e., to contract upon being heated, such that the size of the film decreases while the film is in an unrestrained state. As used herein said term refer to oriented films with a free shrink in each of the machine and the transverse directions, as measured by ASTM D 2732, of at least 5 % at 98 °C.

As used herein, the term "homo-polymer" is used with reference to a polymer resulting from the polymerization of a single monomer, i.e., a polymer consisting essentially of a single type of mer, i.e., repeating unit.

As used herein, the term "co-polymer" refers to polymers formed by the polymerization reaction of at least two different monomers. When used in generic terms the term "co-polymer" is also inclusive of ter-polymers or multi-polymers. The term "co-polymer" is also inclusive of random co-polymers, block co-polymers, and graft co-polymers.

As used herein, the term "polymer" is inclusive of homo-polymers, and co-polymers.

As used herein, the phrase "heterogeneous polymer" refers to polymerization reaction products of relatively wide variation in molecular weight and relatively wide variation in composition distribution, i.e., typical polymers prepared, for example, using conventional Ziegler-Natta catalysts.

As used herein, the phrase "homogeneous polymer" refers to polymerization reaction products of relatively narrow molecular weight distribution and relatively narrow composition distribution. This term includes those homogeneous polymers prepared using metallocene, or other single-site type catalysts.

As used herein, the term "polyolefin" refers to any polymerized olefin, which can be linear, branched, cyclic, aliphatic, aromatic, substituted, or unsubstituted. More specifically, included in the term polyolefin are homo-polymers of olefin, co-polymers of olefin, co-polymers of an olefin and an non-olefinic co-monomer co-polymerizable with the olefin, such as vinyl monomers, and the like. Specific examples include polyethylene homo-polymer, polypropylene homo-polymer, polybutene homo-polymer, polymethylpentene, ethylene-α-olefin co-polymer, ethylene-cyclic olefin copolymers, propylene-α-olefin co-polymer, butene-α-olefin co-polymer, ethylene-unsaturated ester co-polymer, ethylene-unsaturated acid co-polymer, (e.g. ethylene-ethyl acrylate co-polymer, ethylene-butyl acrylate co-polymer, ethylene-methyl acrylate co-polymer, ethylene-acrylic acid co-polymer, and ethylene-methacrylic acid co-polymer), ethylene-vinyl acetate copolymer, ionomer resins, etc.

As used herein the term "modified polyolefin" is inclusive of modified polymer prepared by co-polymerizing the homo-polymer of the olefin or co-polymer thereof with an unsaturated carboxylic acid, e.g., maleic acid, fumaric acid or the like, or a derivative thereof such as the anhydride, ester or metal salt or the like. It is also inclusive of modified polymers obtained by incorporating into the olefin homo-polymer or co-polymer, by blending or preferably by grafting, an unsaturated carboxylic acid, e.g., maleic acid, fumaric acid or the like, or a derivative thereof such as the anhydride, ester or metal salt or the like.

As used herein, the term "adhered", as applied to film layers, broadly refers to the adhesion of a first layer to a second layer either with or without an adhesive, a tie layer or any other layer therebetween, and the word "between", as applied to a layer expressed as being between two other specified layers, includes both direct adherence of the subject layer to the two other layers it is between, as well as a lack of direct adherence to either or both of the two other layers the subject layer is between, i.e., one or more additional layers can be imposed between the subject layer and one or more of the layers the subject layer is between.

In contrast, as used herein, the phrase "directly adhered" is defined as adhesion of the subject layer to the object layer, without a tie layer, adhesive, or other layer therebetween.

As used herein the term "gas-barrier" when referred to a layer, to a resin contained in said layer, or to an overall structure, refers to the property of the layer, resin or structure, to limit to a certain extent passage through itself of gases. When referred to a layer or to an overall structure, the term "gas-barrier" is used herein to identify layers or structures characterized by an Oxygen Transmission Rate (evaluated at 23°C and 0 % R.H. according to ASTM D-3985) of less than 500 cm³/m².day.bar.

As used herein each of the terms "polyolefin layer" or "polyamide layer" refers to a layer that comprises preferably more than 70 wt. %, more preferably more than 80 wt. %, and even more preferably more than 90 wt. % of the respective polymer, i.e., polyolefin or polyamide. In a most preferred embodiment each of these terms refers to a layer essentially consisting of the respective polymer, where the term "essentially consisting" is used herein to indicate that the layer can contain in addition to the polyolefins or polyamides respectively, additives as conventionally employed in this field, that are added to the resins in very small amounts with the aim at improving polymer processability or end film performance. Exemplary of such additives are for instance antioxidants, slip and antiblocking agents, UV absorbers, pigments, antifog agents or compositions, antimicrobial agents, cross-linking agents, crosslinking-controlling agents, fluorinated polymers, and the like agents, that may be added as such to the resin of the layer or as concentrates in a carrier resin other than the resin of the layer.

As used herein the term "amorphous polyamide" refers to those polyamides that do not show an endotherm crystalline melting peak in a DSC measurement using the ASTM D-3417 method and increasing the temperature by 10 °C/minute.

As used herein "deep-drawing" is used to indicate in general a process of shaping a heated thermoplastic film in a mould to form a container, with no particular ratio between the dimensions of the mould being required.

### BRIEF DESCRIPTION OF THE DRAWINGS

Figure 1 illustrates an enlarged cross-sectional view of a first preferred film of the present invention;
Figure 2 illustrates an enlarged cross-sectional view of a second preferred film of the present invention;
Figure 3 illustrates an enlarged cross-sectional view of a third preferred film of the present invention;
Figure 4 is a schematic representation illustrating the packaging process in which the film of the invention can suitably be employed;
Figure 5 is a schematic view of the deep-drawing station used in the packaging process of Figure 4.

### DETAILED DESCRIPTION OF THE INVENTION

A first object of the present invention is a multi-layer, gas-barrier, biaxially oriented and heat-shrinkable film comprising
a first outer heat-sealable polyolefin layer a),
an inner gas-barrier layer b), and
a second outer abuse resistant layer c), whereby the second outer abuse resistant layer is a polyamide layer that comprises a major proportion of one or more amorphous polyamides.

"Major proportion" means that the amorphous polyamide(s) contained in said layer amounts to more than 50 % by weight of the polyamide components of the layer itself.

The first outer layer a) that in the end package will be the inside, heat-sealable, layer of the package, will comprise one or more heat-sealable polyolefins.

Preferred polymers for said layer are selected from the group of ethylene homopolymers, ethylene co-polymers, propylene co-polymers and blends thereof and more preferably they are selected from the group of ethylene homopolymers, ethylene copolymers and blends thereof.

Ethylene homo- and co-polymers particularly suitable for the first outer layer a) are selected from the group consisting of ethylene homo-polymers (polyethylene), heterogeneous or homogeneous ethylene-α-olefin copolymers, ethylene-cyclic olefin copolymers, such as ethylene-norbornene copolymers, ethylene-vinyl acetate co-polymers, ethylene-(C₁-C₄) alkyl acrylate or methacrylate co-polymers, such as ethylene-ethyl acrylate co- polymers, ethylene-butyl acrylate co-polymers, ethylene-methyl acrylate co-polymers, and ethylene-methyl methacrylate co-polymers, ethylene-acrylic acid co-polymers, ethylene-methacrylic acid co-polymers, and blends thereof in any proportion.

Preferred ethylene homo- and co-polymers for said first outer layer a) are e.g. polyethylene having a density of from 0.900 g/cm³ to 0.950 g/cm³, heterogeneous and homogeneous ethylene-α-olefin copolymers having a density of from 0.880 g/cm³ to 0.945 g/cm³, more preferably of from 0.885 g/cm³ to 0.940 g/cm³, yet more preferably of from 0.890 g/cm³ to 0.935 g/cm³, possibly blended with a small amount of an ethylene-norbornene copolymer, and ethylene-vinyl acetate copolymers comprising from 3 to 28 %, preferably, from 4 to 20 %, more preferably, from 4.5 to 18 % vinyl acetate comonomer, and blends thereof.

Even more preferred ethylene homo- and co-polymers for said first outer layer a) are selected from the group consisting of heterogeneous ethylene-α-olefin copolymers having a density of from 0.890 g/cm³ to 0.940 g/cm³, homogeneous ethylene-α-olefin copolymers having a density of from 0.890 g/cm³ to 0.925 g/cm³, ethylene-vinyl acetate copolymers comprising from about 4.5 to 18 % vinyl acetate comonomer, and blends thereof.

In one embodiment of the present invention the first outer layer a) comprises a blend of at least two different ethylene-α-olefin copolymers with a density of from 0.890 g/cm³ to 0.935 g/cm³, more preferably a blend of a homogeneous and a heterogeneous ethylene-α-olefin copolymer, optionally blended with a small amount of ethylene-norbornene copolymer, and ethylene-vinyl acetate copolymer.

Preferably, the ethylene homo- or co-polymers for said first outer layer a) have a melt index of from 0.3 to 10 g/10 min, more preferably from 0.5 to 8 g/10 min, and still more preferably from 0.8 to 7 g/10 min (as measured by ASTM D1238 - 190 °C, 2.16 kg).

Propylene co-polymers suitable for the first outer layer a) are selected from the group consisting of propylene co- and ter-polymers with up to 50 wt.%, preferably up to 35 wt.%, of ethylene and/or a (C₄-C₁₀)-α-olefin, and blends thereof in any proportion.

Preferred propylene co-polymers for said first outer layer a) are selected from the group consisting of propylene-ethylene co-polymers, propylene-ethylene-butene co-polymers and propylene-butene-ethylene copolymers with a total ethylene and butene content lower than 40 wt.%, preferably lower than 30 wt.%, and even more preferably lower than 20 wt.%.

Preferably, the propylene co-polymers have a melt index of from 0.5 to 20 g/10 min, more preferably from 0.8 to 12 g/10 min, still more preferably from 1 to 10 g/10 min (as measured by ASTM D1238 -230 °C, 2.16 kg).

Said first outer layer a) may also contain a blend of one or more ethylene homo- and/or co-polymers with one or more propylene co-polymers, in any proportion.

Preferably however said first outer layer a) will comprise ethylene homo- or co-polymers.

Said first outer layer a) may also comprise a blend of a major proportion of one or more polymers of the group of ethylene homo- and copolymers and propylene copolymers, with a minor proportion of one or more other polyolefins and/or modified polyolefins, such as polybutene homo-polymers, butene-(C₅-C₁₀)-α-olefin copolymers, anhydride grafted ethylene-α-olefin copolymers, anhydride grafted ethylene-vinyl acetate copolymers, rubber modified ethylene-vinyl acetate copolymers, ethylene/propylene/diene (EPDM) copolymers, and the like.

Said additional polymers may be blended with the basic polymers of said first outer layer in an amount that is typically up to 40 % by weight, preferably up to 30 % by weight, more preferably up to 20 % by weight, and still more preferably up to 10 % by weight.

In a most preferred embodiment however said outer layer a) will essentially consist of one or more polymers selected from the group of ethylene homo- and co-polymers.

The thickness of said first outer layer a) is generally higher than about 10 % of the overall thickness of the structure, preferably higher than 12 %, being typically comprised between 15 and 50 %, preferably between 18 and 40 % of the overall thickness of the film.

The inner gas-barrier layer b) comprises at least one gas barrier resin generally selected from vinylidene chloride copolymers (PVDC), and ethylene-vinyl alcohol copolymers (EVOH) preferably blended with polyamides/copolyamides.

The most preferred resin for the gas-barrier layer b) is PVDC. This term includes copolymers of vinylidene chloride and at least one mono-ethylenically unsaturated monomer copolymerizable with vinylidene chloride. The mono-ethylenically unsaturated monomer may be used in a proportion of 2-40 wt. %, preferably 4-35 wt. %, of the resultant PVDC. Examples of the mono-ethylenically unsaturated monomer may include vinyl chloride, vinyl acetate, vinyl propionate, alkyl acrylates, alkyl methacrylates, acrylic acid, methacrylic acid, and acrylonitrile. The vinylidene chloride copolymer can also be a ter-polymer. It is particularly preferred to use a copolymer with vinyl chloride or (C₁ -C₈)-alkyl (meth)acrylate, such as methyl acrylate, ethyl acrylate or methyl methacrylate, as the comonomers. It is also possible to use a blend of different PVDC such as for instance a blend of the copolymer of vinylidene chloride with vinyl chloride with the copolymer of vinylidene chloride with methyl acrylate. The PVDC may contain suitable additives as known in the art, i.e. stabilisers, antioxidizers, plasticizers, hydrochloric acid scavengers, etc. that may be added for processing reasons or/and to control the gas-barrier properties of the resin.

Once the gas-barrier resin has been selected, its thickness in the starting film will be set to provide for the desired oxygen transmission rate (OTR) in the final deep-drawn package, bearing in mind that also the barrier layer will become thinner in the deep-drawing process. High barrier structures will have an OTR below 100 cm³ /day.m².atm and preferably below 80 cm³ /day.m².atm and will be particularly suitable for meat packaging, including fresh red meat and processed meat. Higher OTR will be preferred for packaging e.g. most of the cheeses where generally OTR of from 100 to 500 cm³ /day.m².atm are preferred and from 150 to 450 cm³ /day.m². atm mostly preferred.

The thickness of the barrier layer b) in the starting film may thus range from 3 to 15 µm, preferably from 4 to 12 µm, and more preferably from 5 to 10 µm, depending on the barrier properties required from the end package and the depth of the deep-drawn container, if the film is used in a deep-drawing process.

The biaxially oriented film is characterized by the presence of a polyamide layer comprising a major proportion of one or more amorphous polyamides. As indicated above "major proportion" means more than 50 % of amorphous polyamide over the total amount of the polyamides in the layer. Preferably however the amount of amorphous polyamides will amount to at least 60 %, more preferably at least 70% and even more preferably at least 80% of the polyamide components of the layer. The amorphous polyamides that represent the major proportion of said polyamide layer have a Tg ≤ 120°C, even more preferably ≤ 110°C, and yet even more preferably ≤ 100°C. Preferred materials are amorphous polyamides with a Tg comprised between 60 and 125°C, more preferably comprised between 65 and 115°C and even more preferably comprised between 70 and 100 °C.

The amorphous polyamide(s) used in said layer in a major proportion can be blended, if needed or if desired, with a minor proportion of one or more crystalline or semicrystalline polyamides or copolyamides. The crystalline or semicrystalline components of the blend of the polyamide layer will be chosen in such a way to ensure that the polyamide layer will be stretchable (thus solid-state orientable) at the orientation temperature that will be applied in the film manufacturing process. Thus, if the orientation temperature that will be applied is lower than the Tg of the amorphous polyamide employed in said polyamide layer, one or more polyamides or copolyamides with a low Tg, such as typically polyamide 6, copolyamide 6/12, copolyamide 6/66, and the like, are added thereto to allow orientation. Alternatively, and particularly if the suitably selected orientation temperature is not much higher than the Tg of the amorphous polyamide, or additionally, plasticizers can be used to allow orientation.

Examples of amorphous polyamides includes those amorphous polymers that can be prepared from the following diamines : hexamethylenediamine, 2-methylpentamethylenediamine, 2,2,4-trimethylhexamethylenediamine, 2,4,4-trimethylhexamethylenediamine, bis(4-aminocyclohexyl)methane, 2,2-bis(4-aminocyclohexyl)isopropylidine, 1,4-diaminocyclohexane, 1,3-diaminocyclohexane, m-xylylenediamine, 1,5-diaminopentane, 1,4-diaminobutane, 1,3-diaminopropane, 2-ethyldiaminobutane, 1,4-diaminomethylcyclohexane, p-xylylenediamine, m-phenylenediamine, p-phenylenediamine, and alkyl substituted m-phenylenediamine and p-phenylenediamine. Examples of amorphous polyamides that can be used also include those amorphous polyamides that can be prepared from the following dicarboxylic acids : isophthalic acid, terephthalic acid, alkyl substituted isophthalic acid, alkyl substituted terephthalic acid, adipic acid, sebacic acid, azelaic acid, and the like acids. The diamines and dicarboxylic acids mentioned above can be combined as desired provided the resulting polyamide is amorphous. For example, an aliphatic diamine can generally be combined with an aromatic dicarboxylic acid or an aromatic diamine can generally be combined with an aliphatic dicarboxylic acid to give suitable amorphous polyamides. Preferred amorphous polyamides are however copolyamides where at least a portion of either the diamine or the dicarboxylic acid moieties is aromatic and the other portions are aliphatic.

More particularly amorphous polyamides that can suitably be employed are amorphous copolyamide 6I/6T, amorphous copolyamide 6I/69/66, amorphous copolyamides 66/610/MDX6, and the like amorphous copolyamides. Most preferred copolyamides are amorphous copolyamides 6I/69/66.

In the "thermoform-shrink" packaging processes, the heat treatment to get the shrinkage of the packaging material is generally comprised between 80 and 110 °C as higher temperatures may damage the packaged product. Preferably said temperature is comprised between 85 and 98 °C as this would allow to get the shrink either by means of a hot water bath, in case the shrinking step is carried out on the end sealed package, or anyway by spraying hot water against the deep-drawn container, in case the shrinking step is done before sealing the lid to the container. In order to get a % shrink at 85-98 °C sufficient to give an appealing and tight appearance to the end package, it will typically be necessary to carry out the orientation step at a comparable temperature. This has the additional advantage that when the trapped bubble technology is employed in the manufacture of the film, the reheating of the primary tubing before the stretching can be carried out by passing it through a hot water bath. In such a case, if amorphous polyamides are employed that have a Tg higher than the hot water temperature it will be necessary to blend them with one or more polyamides or copolyamides with a low Tg, as seen above, to carry out the orientation step satisfactorily. When amorphous polyamides with a Tg comparable to or lower than that of the hot water temperature are employed, then the amorphous polyamides need not to be blended and can be used as such in the polyamide layer.

The polyamide layer is the outer abuse layer c) of the structure. In such a case the water of the orientation bath will plasticize the outer polyamide layer and it will be possible to orient the structure also if the Tg of the amorphous polyamide chosen is slightly higher than the orientation temperature.

The use of the polyamide layer as the outer layer c) has the additional advantage that the end structure will be easily printable, that the printed image will not be damaged by the thermoforming process, and that the end structure will show a fairly good abuse resistance.

The thickness of said second outer layer c) generally depends on the structure of the film and on the layer composition. Generally however its thickness will be comprised between 2 and 5 µm, preferably between 2.5 and 12 µm, more preferably between 3 and 10 µm, and yet even more preferably between 3.5 and 8 µm.

Other layers may be present in the overall structure such as structural layers e) to increase the thickness of the overall structure as desired and/or to further improve its stretchability.

In a preferred embodiment the film will comprise one or more than one internal structural layers e) that may be positioned between the heat-sealable polyolefin layer a) and the gas-barrier layer b) or between the gas-barrier layer b) and the outer abuse resistant layer c) or on both sides with respect to the internal gas barrier layer b) and may have the same or a different composition.

Preferably said structural layers e) will be polyolefin layers, polyamide layers comprising a large proportion of amorphous polyamides, or polystyrene layers comprising a large proportion of styrene copolymers as defined above.

Preferred structural polyolefin layers will typically comprise ethylene-vinyl acetate copolymers, ethylene-α-olefin copolymers and blends thereof.

Preferred structural polyamide layers with comprise at least 30 wt.%, preferably at least 40 wt. % and even more preferably more than 50 wt. % of one or more amorphous polyamides.

Preferred polystyrene structural layers will comprise a major proportion of a styrene butadiene copolymer.

Most preferably the film according to the present invention will comprise an inner polystyrene structural layer comprising a major proportion of a styrene-butadiene copolymer. Said major proportion will typically be at least 55 wt %, preferably at least 65 wt. %, more preferably at least 75 wt. %, yet even more preferably at least 85 wt. % over the total amount of polystyrene resin in the layer.

The thickness of these inner structural layers will depend on the desired thickness of the end structure, and is typically comprised between 5 and 50 µm.

Additional layers, such as for instance tie layers, to improve interlayer adhesion, may be, and preferably are, present.

Tie layers f), with the same or a different composition in case more than one is present, may be disposed between the respective layers in case where a sufficient adhesion is not ensured between adjacent layers. The adhesive resin may preferably comprise one or more polyolefins, one or more modified polyolefins, or blends of the above. Specific, not limitative, examples thereof may include: ethylene-vinyl acetate copolymers, ethylene-(meth)acrylate copolymers, ethylene-α-olefin copolymers, any of the above modified with carboxylic or preferably anhydride functionalities, elastomers, and a blend of these resins.

In certain embodiments of the present invention polyolefin layers with a high content of ethylene-vinyl acetate copolymers, and particularly of ethylene-vinyl acetate copolymers with a vinyl acetate content of at least 9 %, preferably at least 13 %, may be employed as structural layers providing also the desired adhesion between the layers they are in-between.

The number of layers in the films according to the present invention is not particularly critical and can be up to 8, 9 or even 10. Preferred films however will have from 5 to 7 layers in the structure.

In all the film layers, the polymer components may contain appropriate amounts of additives normally included in such compositions. Some of these additives are preferably included in the outer layers or in one of the outer layers, while some others are preferably added to inner layers. These additives include slip and anti-block agents such as talc, waxes, silica, and the like, antioxidants, stabilizers, plasticizers, fillers, pigments and dyes, cross-linking inhibitors, cross-linking enhancers, UV absorbers, antistatic agents, anti-fog agents or compositions, and the like additives known to those skilled in the art of packaging films.

The film according to the present invention may be surface printed if desired.

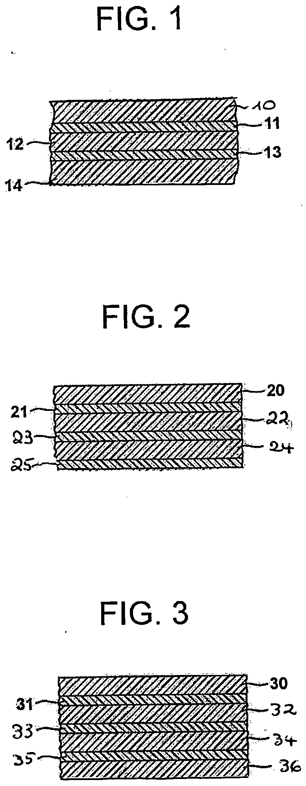

Representative examples of films according to the present invention are illustrated in Figures 1 to 3.

Figure 1 illustrates a first embodiment of the present invention where the film has five layers, where 10 is the outer polyolefin heat-sealing layer a) and 14 is the second outer layer c) which is a polyamide layer comprising a major proportion of one or more amorphous polyamides. In one embodiment of said five layer film, 11 represents a structural inner layer e) that bonds to the barrier layer b) indicated by the numeral 12, and 13 represents a tie layer f) that is used to increase the adhesion of the outer polyamide layer c) to the inner gas-barrier layer b). Alternatively, still in said five layer embodiment, 11 and 13 both represent tie layers f) and 12 indicates the gas-barrier layer b). In still another embodiment of said five layer film, 13 indicates the gas barrier layer b) and comprises a gas-barrier resin, like EVOH, that bonds directly to the outer polyamide layer 14, 11 indicates a tie layer f) and 12 indicates a structural layer that bonds directly to the gas-barrier layer b) (e.g., another polamide layer in this case) or 11 indicates a structural layer e) and 12 a tie layer f).

Figure 2 illustrates a second embodiment of the present invention where the film has six layers, where 20 is the outer polyolefin heat-sealing layer a), and 25 is the second outer abuse resistant layer c). In one embodiment of said six layer film, the outer layer c) indicated with 25 is a polyamide layer comprising a major proportion of one or more amorphous polyamides. In such a case 24 may indicate a gas-barrier layer b) made of a polymer like EVOH that bonds directly to the outer polyamide layer 25, and those layers indicated with 21, 22, and 23 are structural layers e) or tie layer f); alternatively, 24 may indicate a tie layer f), 23 is a gas-barrier layer b), and 21 and 22 are structural layers e) or tie layers f). In another embodiment of the six layer film, not according to the present invention, the polyamide layer containing a major proportion of one or more amorphous polyamides is an internal layer d) which is indicated by the numeral 22, 21 is a tie layer f), and one of 23 and 24 indicates the gas-barrier layer b) and the other a tie layer f).

Figure 3 illustrates a third preferred embodiment of the present invention where the film has seven layers, where 30 indicates the outer heat-sealable polyolefin layer a) and 36 the outer abuse-resistant layer c). In one embodiment of the seven layer film the outer abuse-resistant layer c) is a polyamide layer comprising a major proportion of one or more amorphous polyamides. In such a case 35 may represent the gas-barrier layer b) with EVOH as the gas-barrier layer, and the other layers of the structure may be structural layers e) or tie layers f), or 35 may represent a tie layer f), 34 may indicate the gas-barrier layer b) and 31, 32, and 33 may indicate structural layers e) or tie layers f). In another embodiment of the seven layer film, not according o the present invention, the polyamide layer comprising a major proportion of one or more amorphous polyamides is an internal layer d) that may be indicated as 32 or 33, 34 or 35 denote the gas-barrier layer b) and the other layers are tie layers f) or structural layers e).

In one preferred embodiment of the seven layer film structure of the present invention, the outer abuse resistant layer c) (36 in Fig. 3) is a polyamide layer containing a major proportion of one or more amorphous polyamides, and the structure comprises, as a structural layer e), either a polyamide layer comprising a large proportion of one or more amorphous polyamides or, preferably, a polystyrene layer comprising a large proportion of styrene copolymers (32 in Fig. 3).

The films according to the present invention are bi-axially oriented, i.e. oriented in both the MD and TD directions, and bi-axially heat-shrinkable, and show a free shrink in each direction of at least 5 % at 98 °C.

Preferably however they show a free shrink at 98 °C that is more than 15 % in each direction, and more preferably at least 20 %.

The free shrink of the film is determined by measuring the percent dimensional change in a 10 cm x 10 cm film specimen when subjected to selected heat (i.e., at a temperature of 98 °C in our case) according to ASTM D2732.

The films according to the present invention can be suitably manufactured by the so-called trapped-bubble process, which is a known process typically used for the manufacture of heat-shrinkable films for food contact packaging. According to said process, the multilayer film is co-extruded through a round die to obtain a tube of molten polymeric material which is quenched immediately after extrusion without being expanded, optionally cross-linked, then heated to a temperature which is above the Tg of all the resins employed and below the melting temperature of at least one of the resins employed, typically by passing it through a hot water bath, or alternatively by passing it through an IR oven or a hot air tunnel, and expanded, still at this temperature by internal air pressure to get the transversal orientation and by a differential speed of the pinch rolls which hold the thus obtained "trapped bubble", to provide the longitudinal orientation. Typical orientation ratios with this technology will be comprised between about 2 and about 5 in each direction and preferably between about 3 and about 4 in each direction. Orientation is preferably carried out at a temperature above 85 °C, preferably above 90 °C, and even more preferably above 95 °C.

After being stretched, the film might be cooled while substantially retaining its stretched dimensions to somehow freeze the molecules of the film in their oriented state and rolled for further processing or preferably it will be annealed. Annealing is a well-known process in which the film is heated under controlled tension to a suitably selected temperature, to produce lower shrinkage values as desired for the particular temperature. The annealing step is typically carried out at temperatures that may be e.g. around 40 °C, 50 °C, 60 °C, 70 °C, or even higher, provided however the annealed film will still maintain a % free shrink in each direction of at least 5 % at 98 °C, preferably of more than 15 %, and more preferably at least 20 %.

Cross-linking is typically obtained by passing the flattened tubing through an irradiation vault where it is irradiated by high-energy electrons. Depending on the characteristics desired, this irradiation dosage can vary from 20 to 200 kGy, preferably from 30 to 150 kGy.

Depending on the number of layers in the structure it may be advisable or necessary to split the co-extrusion step: a tube will first be formed of a limited number of layers, with first outer polyolefin heat-sealable layer a) on the inside of the tube; this tube will be quenched quickly and before submitting it to the orientation step it will be extrusion-coated with the remaining layers, again quenched quickly, optionally cross-linked, and then passed to the orientation. During extrusion-coating the tube will be slightly inflated just to keep it in the form of a tube and avoid that it collapses.

The coating step can be simultaneous, by coextruding all the remaining layers altogether, so as to simultaneously adhere all of them, one over the other, to the quenched tube obtained in the first coextrusion step, or this coating step can be repeated as many times as the layers which are to be added.

The extrusion-coating step is clearly also required when a film only partially cross-linked is desired. As an example, in the case of barrier structures comprising a PVDC layer that might be degraded/discoloured by irradiation, it might be desirable to avoid cross-linking of the PVDC layer. In this case the irradiation step might be performed after the extrusion of the first group of layers, which would not comprise the PVDC barrier layer, and before extrusion coating.

Alternatively, the film according to the present invention may be obtained by flat extrusion (co-extrusion or extrusion coating) and biaxial stretching by a simultaneous or a sequential tenter process. In such a case generally higher orientation ratios can be applied.

Still alternatively the film according to the present invention may be obtained by heat- or adhesive-lamination of the separately obtained webs each containing only part of the film sequence of layers, followed by orientation of the obtained overall structure.

The films of the present invention are particularly suitable for use in the so-called "thermoform-shrink" processes as deep-drawable films. In such a case the thickness of the film will typically be comprised between 40 and 160 µm, depending on the depth desired for the formed container. For medium depths a preferred thickness will be generally in the range between 40 and 90 µm, while for high depths a preferred thickness will be typically in the range between 60 and 160 µm.

The films of the present invention can be used also as the lidding film that closes the deep-drawn package. If also the lid is deep-drawn, then the same thickness range will be appropriate, while if the film is sealed to the flange of the deep-drawn container as a flat lid, a thickness comprised between 8 and 35 µm will be sufficient and if it has to be stretched to a certain extent, because the product loaded into the deep-drawn container slightly protrudes therefrom, then a thickness of e.g., from 20 to 40 µm, will be preferred.

If no deep-drawing of the lid is required however any type of gas-barrier heat-shrinkable film can be employed for the lidding film provided its heat-sealing layer can be heat-sealed to the first outer sealing layer a) of the film of the invention and provided its outer abuse layer does not stick to the heat-sealing bars.

The films of the present invention can be employed also for other packaging applications, in particular for any packaging application where a shrink thermoplastic material can be employed, such as shrink wrapping, shrink bag, etc. For these uses the film may have a thickness ranging from 20 to 120 µm, preferably between 20 and 40 µm for shrink film applications and between 40 and 120 µm for shrink bag or tubing applications.

The following examples are presented for the purpose of further illustrating and explaining the present invention in its film first object and are not to be taken as limiting in any regard. Unless otherwise indicated, all parts and percentages are by weight.

In the following examples the resins indicated in Table I below have been employed:

**TABLE I**

| | |
|---|---|
| AD1 | Ethylene-vinyl acetate-maleic anhydride terpolymer - Orevac® 9318 by Arkema |
| AD2 | Rubber modified maleic anhydride grafted LLDPE - PX 3237 by Equistar |
| AD3 | Maleic anhydride modified LLDPE - Bynel 4104 by DuPont |
| EC1 | Homogeneous ethylene-α-olefin copolymer with d = 0.90 g/cm³ and MI = 6 g/10 min-Affinity PL1280G by Dow |
| EC2 | Heterogeneous ethylene-α-olefin copolymer with d = 0.91 g/cm³ and MI = 6.6 g/10 min - Stamylex 08-076F by DSM |
| EC3 | Heterogeneous ethylene-α-olefin copolymer with d = 0.92 g/cm³ and MI = 1 g/10 min - Dowlex 2045S by Dow |
| EPBT | Ethylene-propylene-butene terpolymer - MI = 5 g/10 min (230°C /2.16 Kg) and m.p. 131 °C - Eltex PKS 359 by Solvay |
| EVA1 | Ethylene-vinyl acetate copolymer (14 wt. % VA - MI = 0.3 g/10 min) - 1003VN4 by Total |
| EVA2 | Ethylene-vinyl acetate copolymer (14 wt. % VA - MI = 0.3 g/10 min) - Escorene FL00014 by ExxonMobil |
| EVOH | EVOH - EVAL SP292B by Kuraray |
| MB-PA | Slip and anti-block concentrate in PA 6 - Grilon MB 3361 FS Natural by EMS-Chemie |
| MB-PO | Slip concentrate in ethylene-methacrylic acid copolymer - Conpol 20S2 by DuPont Packaging & Industrial Polymers |
| PA1 | Lubricated copolyamide 6/66 - m.p. 196°C - Ultramid® C33 L 01 by BASF |
| PA2 | Amorphous PA 61/69/66 with Tg 80 °C - Grivory FE4495 by EMS-Chemie |
| PA3 | Amorphous PA 61/69/66 with Tg 100 °C - Grivory FE4494 by EMS-Chemie |
| PA4 | PA 6/12 - m.p. 130 °C - Grilon CF6S by EMS-Chemie |
| PS1 | Styrene-butadiene copolymer - K-Resin® DK13 by Chevron-Phillips |
| PS2 | Polystyrene - Polystyrol 143E by BASF |
| PVDC | Stabilized PVDC - IXAN PV 910 |

| | |
|---|---|
| ➢ Melt Flow Indexes (MI's) are measured by ASTM D-1238 and are reported in grams/10 minutes. Unless otherwise indicated the conditions used are 190°C/2.16 kg. ➢ Unless otherwise specifically indicated, all percentages are by weight. | |

### EXAMPLE 1

A 7-layer structure, 68 µm thick, has been prepared by coextrusion of a substrate consisting of the first four layers, starting with the first outer polyolefin heat-sealable layer a), followed by quenching of the extruded four layer tubular film, irradiation at 64 kGy and extrusion coating thereof with a gas-barrier layer b), a tie layer f) and the second outer abuse resistant layer c). The obtained tube is then rapidly cooled and biaxially oriented by passing it through a hot water bath (about 95-98°C), then inflated to get transverse orientation and stretched to get longitudinal orientation at orientation ratios of 3.2:1 in transversal and 3.5:1 in longitudinal. The film was annealed at 45 °C. The resins used for the different layers and the partial thickness of each layer are indicated below :
1st Layer - layer a) - 78.5 % EC1 + 20 % EC2 + 1.5 % MB-PO - 14.6 µm
2nd layer - layer e') - 80 % EVA 1 + 20 % EC3 - 14.6 µm
3rd layer - layer e) - 90 % PS1 + 10 % PS2 - 9.8 µm
4th layer- layer e') - 80 % EVA1 + 20 % EC3 - 14.6 µm
5th layer - layer b) - PVDC - 4.4 µm
6th layer - layer f) - 30 % AD1 + 70 % AD2 - 4.9 µm
7th layer - layer c) - 60 % PA2 + 40 % PA I - 4.9 µm

### EXAMPLES 2 TO 4

The following 7-layer structures have been prepared following the same process described above with the only difference that the composition of the seventh layer, layer c), has been replaced by those indicated in the following :
- Example 2: 68 % PA3 + 30 % PA1 + 2 % MB-PA
- Example 3: 80 % PA3 + 20 % PA1
- Example 4: 80 % PA2 + 20 % PA1

### EXAMPLE 5

A 7-layer structure, 53 µm thick, has been prepared by following the process of Example 1 but using 100 % PA2 in the outer abuse layer c). The thickness of the different layers, from the outer heat-sealable layer a) to the outer abuse resistant layer c) were as follows : 11/9.5/8/9.5/6/5/4.

### EXAMPLES 6 TO 11

The 7-layer structures indicated in the following Table II can be prepared by following essentially the same process indicated in Example 1

**TABLE II**

| | Example 6 | Example 7 | Example 8 | Example 9 | Example 10 | Example 11 |
|---|---|---|---|---|---|---|
| 1 st layer Layer a) | 78% EC2 + 20% EC1 + 2% MB-PO 20 µm | 78% EC2 + 20% EC1 + 2% MB-PO 20 µm | 98% EC2 + 2% MB-PO 12 µm | 98% EC 1 + 2% MB-PO 12 µm | 98% EC2 + 2% MB-PO 20 µm | 78% EC2 + 20% EC1 + 2% MB-PO 20 µm |
| 2nd layer | 30% AD1 + 70% AD2 - 5 µm | 30% AD1 + 70% AD2 - 5 µm | 80% EVA2 + 20% EC3 8 µm | 80% EVA1 + 20% EC1 8 µm | 30% AD1 + 70% AD2 5 µm | 30 % AD1 + 70 % AD2 5 µm |
| 3rd layer | 60%PA1 + 40 % PA2 10 µm | 70 % PA1 + 30 % PA2 10µm | 80 % PS 1 + 20% PS2 10 µm | 70%PS1+ 30% PS2 10 µm | 40 % PA1 + 60 % PA2 10 µm | 40%PA1+ 60 % PA2 10 µm |
| 4th layer | 30% AD1 + 70% AD2 5 µm | 30% AD1 + 70% AD2 5 µm | 80% EVA2 + 20% EC3 8 µm | 80% EVA 1 + 20% EC1 8 µm | 30% AD1 + 70% AD2 5 µm | 30% AD1 + 70% AD2 5 µm |
| 5th layer Layer b) | PVDC 5 µm | PVDC 5 µm | PVDC 5 µm | PVDC 5 µm | PVDC 5 µm | PVDC 5 µm |
| 6th layer | 30% AD1 + 70% AD2 5 µm | 30% AD1 + 70% AD2 5 µm | 30% AD1 + 70% AD2 5 µm | 30% AD1 + 70% AD2 5 µm | 30% AD1 + 70% AD2 5 µm | 80% EVA2 + 20% EC3 8 µm |
| 7th layer Layer c) | 60% PA2 + 40% PA1 6 µm | 70% PA3 + 20% PA1 6 µm | 80% PA2 + 20%PA1 8 µm | 60 % PA2 + 40 % PA1 8µm | 68% PA3 + 30% PA1 + 2% MB-PA 6 µm | 90% PS1 + 10% PS2 10 µm |

### EXAMPLES 12-13

The following 6-layer structures can be prepared by coextrusion without irradiation, followed by quenching and orientation from hot water at stretching ratios of about 2.5:1 in longitudinal and 2.5:1 in transversal.

**TABLE III**

| Layer | Example 12 | Example 13 |
|---|---|---|
| 1 st layer - Layer a) | EPBT - 25 µm | EPBT - 25 µm |
| 2nd layer | EVA2 - 25 µm | EVA2 - 25 µm |
| 3rd layer | AD3 - 8µm | AD3 - 8 µm |
| 4th layer - Layer b) | 60% PA4 + 40% PA2 - 8 µm | 70% PA2 + 30% PA1 - 8µm |
| 5th layer | EVOH - 8 µm | EVOH - 8 µm |
| 6th layer - Layer c) | 70% PA2 + 30% PA1 - 8µm | 70% PA2 + 30% PA1 - 8 µm |

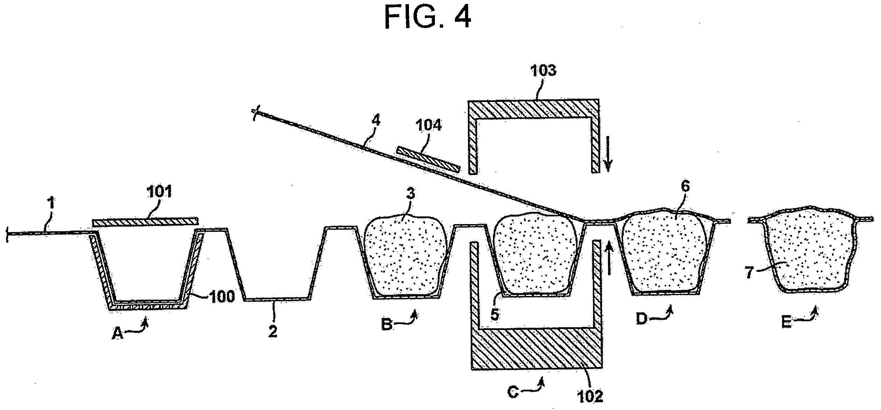

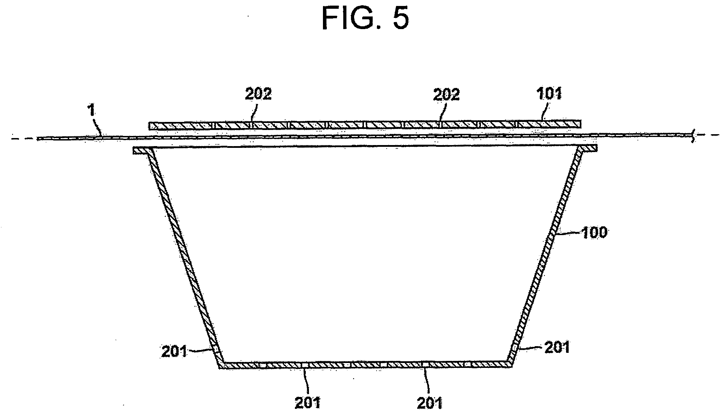

In Figure 4 it is schematically illustrated a "thermoform-shrink" process. For use in said process the film according to the present invention indicated by the numeral 1, in the form of a webstock, is laterally gripped (not shown in the Figure) by circulating strands of chains and guided from the line input towards the deep-drawing station A. In said station once the heating plate 101 has heated the film to a temperature sufficient to soften it, the heat-softened thermoplastic film is deep-drawn in the mold 100. Heating can be done by radiation (e.g., infrared radiation), convection, conduction or any combination of these methods. The temperature reached by the film should be high enough to allow it to form well but not too high as otherwise it may flow excessively. Typically with the film according to the present invention a temperature around 95-105°C is employed. In the basic forming method the primary force causing the softened plastic film to come into contact with the mold is the difference in pressure between the two sides of the plastic sheet. This can be obtained either applying a vacuum in the mold through the ports indicated in Figure 5 with the numerals 201 and/or by causing compressed air from the ports 202 of Figure 5 to force the softened plastic into contact with the mold. In this latter case ports 201 are anyway needed to evacuate the air trapped by the film in the mold. Other methods might be used in this forming step, such as for instance the plug assist thermoforming method but it appears that for thin films like the heat-shrinkable films according to the present invention there is no need to use these more sophisticated methods. The mold maybe a single or a multiple one and the shape of each cavity may vary as desired. Molds with a depth of from about 40 to about 140 mm are preferably used. Once the forming step in station A is completed, the mold 100 is lowered and the formed containers 2, still joined together by the plastic web laterally gripped, are guided along the packaging line to a loading station B where they are loaded, either manually or automatically, with the product to be packaged 3. Then the loaded containers are moved to a vacuum sealing chamber C where an upper film 4 is supplied on top of the loaded container 5. The vacuum-sealing chamber C is made by a lower part 102 and an upper part 103 which are movable in a reciprocating manner in the direction of the arrows to close the chamber. Once the chamber is closed, the space within the chamber is evacuated, including the space between the loaded deep-drawn container 5 and the upper film 4 and a sealing frame (not shown in Figure 4) is then actuated to seal the two along the flange of the deep-drawn container. If the product loaded into the deep-drawn container protrudes above the plane of the flange of the container, the upper film 4 will have either to be deep-drawn similarly to the lower one, or stretched over the top surface of the product. In both cases the upper film will have to be laterally gripped by strands of circulating chains. In the former case, a forming station as described above but providing for an inverted deep-drawn container will be present upstream the vacuum sealing station C to deep-draw the upper lidding film. The mold used in this case will have the same shape as that used for the lower film but not necessarily the same depth, and the deep-drawn container 3 and the deep-drawn lid obtained from the upper film 4, will enter into the vacuum-sealing station C in such a way that once the chamber is evacuated, their flanges will overlap. In the latter case it will be sufficient to heat the gripped upper film before guiding it into the vacuum-sealing chamber to allow its easy stretching. Heating can be obtained by contacting the film with a heating plate 104 or by any other known means.

Once the package is sealed in the vacuum-sealing chamber C, air is restored in the chamber and the chamber is opened. The packages 6 are separated, either inside or outside the vacuum chamber by means e.g. of cutting knives and then conveyed to a shrink station E, where they are submitted to a heat treatment that shrinks the packaging material and gives the tight appearance to the end packages 7. For instance a water bath, a hot air tunnel or an IR heater, could suitably be employed in this step.

Representative films according to the present invention have been evaluated in the deep-drawing step of the above-described process. The features that have been evaluated were the formability (i.e., the depth reached in the mold and how precisely the shape of the formed container corresponded to the shape of the mold (any "shrink-back" effect and the so-called "pouch definition")), the mechanical properties of the deep-drawn container and the shrink properties of the deep drawn container (i.e., % free shrink, shrink tension, and residual shrink tension). In particular the films of Examples 2 and 3, have been deep drawn to a depth of 80 mm and the film of Example 5 has been deep drawn up to a depth of 100 mm. While formability was evaluated visually by the operator and judged very good for all the three films, the % free shrink at 95 °C (ASTM 2732), the shrink tension at the same temperature and the residual (or cold) shrink tension following heating at the given temperature (ASTM 2838) have been evaluated on the formed films by the ASTM methods indicated between parentheses and proved to be satisfactory for all the films tested.

The mechanical properties were evaluated by measuring the puncture resistance of the deep-drawn containers at 30 °C by an internal test method that is described shortly below:
a sample (6.5 x 6.5 cm) of the deep-drawn container (from the base) is fixed in a specimen holder connected to a compression cell mounted on a dynamometer (an Instron tensile tester), when the dynamometer is started, a punch (a punching sphere, 5-mm in diameter soldered on a plunger) is brought against the film sample at a constant speed (30 cm/min) at a temperature of 30 °C, and the force needed to puncture the sample is thus determined.

## Claims

1. A multi-layer, gas-barrier, biaxially oriented and heat-shrinkable film comprising
a first outer heat-sealable polyolefin layer a)
an inner gas-barrier layer b), and
a second outer abuse resistant layer c)
wherein said second outer abuse layer c) is a polyamide layer that comprises a major proportion of one or more amorphous polyamides, wherein the amorphous polyamides making up the major proportion of said polyamide layer have a Tg which is ≤120 °C.

2. The multi-layer, gas-barrier, biaxially oriented and heat-shrinkable film of claim 1 wherein the amorphous polyamides making up the major proportion of said polyamide layer have a Tg which is ≤ 110°C, and preferably ≤ 100°C.

3. The multi-layer, gas-barrier, biaxially oriented and heat-shrinkable film of any of preceding claims 1 or 2 wherein the amount of one or more amorphous polyamides is at least 60 %, preferably at least 70 %, more preferably at least 80 % of the total amount of polyamide components in the polyamide layer.

4. The multi-layer, gas-barrier, biaxially oriented and heat-shrinkable film of any of preceding claims 1 to 3 wherein the inner barrier layer b) comprises PVDC.

5. The multi-layer gas-barrier, biaxially oriented and heat-shrinkable film of claim 1 or 2 which further comprises one or more inner polyolefin layers, polyamide layers comprising a large proportion of amorphous polyamides, or polystyrene layers comprising a large proportion of styrene copolymers.

6. The multi-layer, gas-barrier, biaxially oriented and heat-shrinkable film of claim 5 which comprises an inner structural layer comprising a major proportion of a styrene-butadiene copolymer.

7. A process of packaging a product which process involves deep-drawing an oriented heat-shrinkable film to form a flexible container, loading the product to be packaged in the thus formed container, evacuating and closing the container by means of a lid sealed to the flange of the container and subjecting the packaging material to a heat-shrinking step, either before or after sealing of the lid to the flange, wherein the oriented heat-shrinkable film which is deep-drawn is a film of any of preceding claims 1 to 6.

8. The process of claim 7 wherein the thickness of the film used in the deep-drawing step is comprised between 40 and 160 µm.

9. A shrunk package obtained by the process of claims 7 or 8.

10. Use of a film according to claims 1 to 6 in thermoform- shrink processes.

## Patentansprüche

1. Mehrschichtige, biaxial ausgerichtete Gassperr-Wärmeschrumpffolie umfassend
eine erste äußere heißsiegelfähige Polyolefinschicht a)
eine innere Gassperrschicht b), und
eine zweite äußere, widerstandsfähige Schicht c)
wobei die zweite äußere, widerstandsfähige Schicht c) eine Polyamidschicht ist, die einen erheblichen Anteil von einem oder mehreren amorphen Polyamiden umfasst, wobei die amorphen Polyamide, die den erheblichen Anteil der Polyamidschicht ausmachen, eine Tg von ≤120°C aufweisen.

2. Mehrschichtige, biaxial ausgerichtete Gassperr-Wärmeschrumpffolie nach Anspruch 1, wobei die amorphen Polyamide, die den erheblichen Anteil der Polyamidschicht ausmachen, eine Tg von ≤110°C, und vorzugsweise von ≤100°C, aufweisen.

3. Mehrschichtige, biaxial ausgerichtete Gassperr-Wärmeschrumpffolie nach einem der vorhergehenden Ansprüche 1 oder 2, wobei die Menge von einem oder mehreren amorphen Polyamiden mindestens 60%, vorzugsweise mindestens 70%, weiter vorzugsweise mindestens 80% der Gesamtmenge an Polyamidbestandteilen in der Polyamidschicht ist.

4. Mehrschichtige, biaxial ausgerichtete, Gassperr-Wärmeschrumpffolie nach einem der vorhergehenden Ansprüche 1 bis 3, wobei die innere Sperrschicht b) PVDC umfasst.

5. Mehrschichtige, biaxial ausgerichtete Gassperr-Wärmeschrumpffolie nach Anspruch 1 oder 2, die weiter eine oder mehrere innere Polyolefinschichten, Polyamidschichten umfassend einen hohen Anteil von amorphen Polyamiden oder Polystyrolschichten umfassend einen hohen Anteil von Styrol-Copolymeren umfasst.

6. Mehrschichtige, biaxial ausgerichtete Gassperr-Wärmeschrumpffolie nach Anspruch 5, die eine innere Strukturschicht umfassend einen erheblichen Anteil eines Styrol-Butadien-Copolymers umfasst.

7. Verfahren zum Verpacken eines Produkts, welches das Tiefziehen einer ausgerichteten Wärmeschrumpffolie zur Bildung eines flexiblen Behälters, das Laden des zu verpackenden Produkts in den so gebildeten Behälter, das Evakuieren und Verschließen des Behälters mittels eines am Behälterflansch versiegelten Deckels und das Unterziehen des Verpackungsmaterials einem Wärmeschrumpfschritt vor oder nach dem Versiegeln des Deckels am Flansch beinhaltet, wobei die ausgerichtete Wärmeschrumpffolie, die tiefgezogen wird, eine Folie nach einem der vorhergehenden Ansprüche 1 bis 6 ist.

8. Verfahren nach Anspruch 7, wobei die Dicke der beim Tiefziehschritt verwendeten Folie zwischen 40 und 160 µm beträgt.

9. Schrumpfpackung, erhalten durch das Verfahren nach Anspruch 7 oder 8.

10. Verwendung einer Folie nach den Ansprüchen 1 - 6 in Thermoform-Schrumpfverfahren.

## Revendications

1. Film multicouche formant barrière aux gaz, à orientation biaxiale et thermorétractable, comprenant
une première couche extérieure en polyoléfine capable d'être thermoscellée a)
une couche intérieure formant barrière aux gaz b), et
une seconde couche extérieure résistant aux violations c),
dans lequel ladite seconde couche extérieure résistant aux violations c) est une couche de polyamide qui comprend une majeure proportion d'un ou plusieurs polyamides amorphes, dans lequel les polyamides amorphes constituant la majeure portion de ladite couche de polyamide ont une Tg qui est ≤ 120° C.

2. Film multicouche formant barrière aux gaz, à orientation biaxiale et thermorétractable selon la revendication 1, dans lequel les polyamides amorphes qui constituent la majeure proportion de ladite couche de polyamide ont une Tg qui est ≤ 110° C et de préférence ≤ 100° C.

3. Film multicouche formant barrière aux gaz, à orientation biaxiale et thermorétractable selon l'une quelconque des revendications précédentes 1 ou 2, dans lequel la quantité d'un ou plusieurs polyamides amorphes est d'au moins 60 %, de préférence au moins 70 %, de façon plus préférée au moins 80 % de la quantité totale des composants de polyamide dans la couche de polyamide.

4. Film multicouche formant barrière aux gaz, à orientation biaxiale et thermorétractable selon l'une quelconque des revendications précédentes 1 à 3, dans lequel la couche barrière intérieure b) comprend du PVDC.

5. Film multicouche formant barrière aux gaz, à orientation biaxiale et thermorétractable selon la revendication 1 ou 2, qui comprend en outre une ou plusieurs couches intérieures en polyoléfine, des couches de polyamide comprenant une large proportion de polyamides amorphes, ou des couches de polystyrène comprenant une large proportion de copolymères de styrène.

6. Film multicouche formant barrière aux gaz, à orientation biaxiale et thermorétractable selon la revendication 5, qui comprend une couche intérieure structurelle comprenant une majeure proportion d'un copolymère styrène-butadiène.

7. Procédé pour emballer un produit, ledit procédé impliquant l'emboutissage d'un film thermorétractable orienté pour former un conteneur flexible, le chargement du produit à emballer dans le conteneur ainsi formé, l'évacuation et la fermeture du conteneur au moyen d'un couvercle scellé sur la bride du conteneur, et l'application d'une étape de thermorétraction au matériau d'emballage, soit avant soit après avoir scellé le couvercle sur la bride, dans lequel le film thermorétractable orienté qui est embouti est un film selon l'une quelconque des revendications précédentes 1 à 6.

8. Procédé selon la revendication 7, dans lequel l'épaisseur du film utilisé dans l'étape d'emboutissage est comprise entre 40 et 160 µm.

9. Emballage thennorétractée obtenu par le procédé des revendications 7 ou 8.

10. Utilisation d'un film selon les revendications 1 à 6 dans des procédés de thermoformage-rétraction.
